Europäisches Patentamt

European Patent Office

Office européen des brevets

(11) Publication number: **0 049 955**
**A1**

# EUROPEAN PATENT APPLICATION

(21) Application number: **81304204.1**

(22) Date of filing: **15.09.81**

(51) Int. Cl.³: **G 01 L 9/06**
**H 01 L 29/84**

(30) Priority: **09.10.80 US 195418**

(43) Date of publication of application:
**21.04.82 Bulletin 82/16**

(84) Designated Contracting States:
**DE FR GB**

(71) Applicant: **GENERAL MOTORS CORPORATION**
**General Motors Building 3044 West Grand Boulevard**
**Detroit Michigan 48202(US)**

(72) Inventor: **Brown, Ronald Eugene**
**901 Hillsdale Drive**
**Kokomo Indiana 46901(US)**

(74) Representative: **Haines, Arthur Donald et al,**
**General Motors Limited Patent Section P.O. Box 242**
**Delaware Drive**
**Tongwell Milton Keynes MK15 8HA(GB)**

(54) Dual cavity pressure sensor.

(57) A silicon chip (38) mounted on a glass base (34) has two cavities (44, 46) formed therein, each defining a diaphragm (48, 50). Ion implanted resistors (52) are formed in each diaphragm and are connected to a Wheatstone bridge circuit. One of the chip cavities (46) is evacuated to a vacuum reference pressure so that barometric pressure is sensed by the corresponding diaphragm (50) when the atmospheric pressure is applied to the top of the chip (38). The other cavity (44) is connected to a pressure source, such as manifold vacuum of an internal combustion engine so that the corresponding diaphragm (48) will measure the differential pressure between the manifold and atmosphere. The output signals of the bridge circuits are combined in such a way as to give a sensor output proportional to the absolute manifold pressure.

Fig.2

## DUAL CAVITY PRESSURE SENSOR

This invention relates to pressure sensors of the semiconductor diaphragm type.

In fuel control circuits for internal combustion engines, it is sometimes required to obtain an electrical signal proportional to the manifold absolute pressure. For this purpose it has been proposed to use pressure sensors comprising a chip of semiconductor material having a cavity formed in one surface to form a thin diaphragm with the other surface. A piezoresistive bridge circuit formed on the diaphragm, when connected into a transducer circuit, provides an electrical signal indicative of the pressure differential across the diaphragm. Thus, by evacuating the cavity to a vacuum reference and applying the manifold pressure to the other side of the diaphragm, a signal representing manifold absolute pressure can be obtained. Contaminants in the manifold exhaust gases applied to the sensor can cause degradation of the circuit formed on the diaphragm and of the electrical leads extending from the diaphragm to external circuitry. A proposed technique for avoiding that problem is to use two pressure sensor chips both having their top surface exposed to atmospheric pressure, one having its cavity at a vacuum reference pressure and the other having its cavity connected to the manifold pressure. That arrangement confines the manifold exhaust gases to the cavity and prevents them from reaching the upper surface of the sensor chips, thus protecting the circuitry thereon. However, it does require two chips thereby greatly increasing the cost of the pressure transducer.

It is therefore a general object of the invention to provide a pressure sensor having two pressure sensing diaphragms on a single chip without the attendant cost of two separate sensors.

The invention is carried out by providing a semiconductor chip with two cavities formed therein, each defining a diaphragm between the cavity and a flat surface of the chip with one cavity at a reference pressure, the other cavity being connected to a first pressure source and the flat side of the chip opposite the cavities being exposed to a second pressure source, and a piezoresistive bridge on the flat surface of each diaphragm so that the bridges, when energized, will have outputs corresponding to the pressure differences across the respective diaphragms.

The above and other advantages will be made more apparent in the following specification taken in conjunction with the accompanying drawings wherein like reference numerals refer to like parts and wherein:

Figure 1 is a cross sectional elevational view of the pressure sensor package containing a pressure sensor according to the invention;

Figure 2 is a cross sectional elevational view of the pressure sensor of Figure 1 taken along a section at right angles to the section of Figure 1;

Figure 3 is a plan view of the pressure sensor chip taken along lines 3-3 of Figure 2; and

Figure 4 is a schematic circuit diagram illustrating a transducer circuit incorporating the pressure sensor of Figure 1.

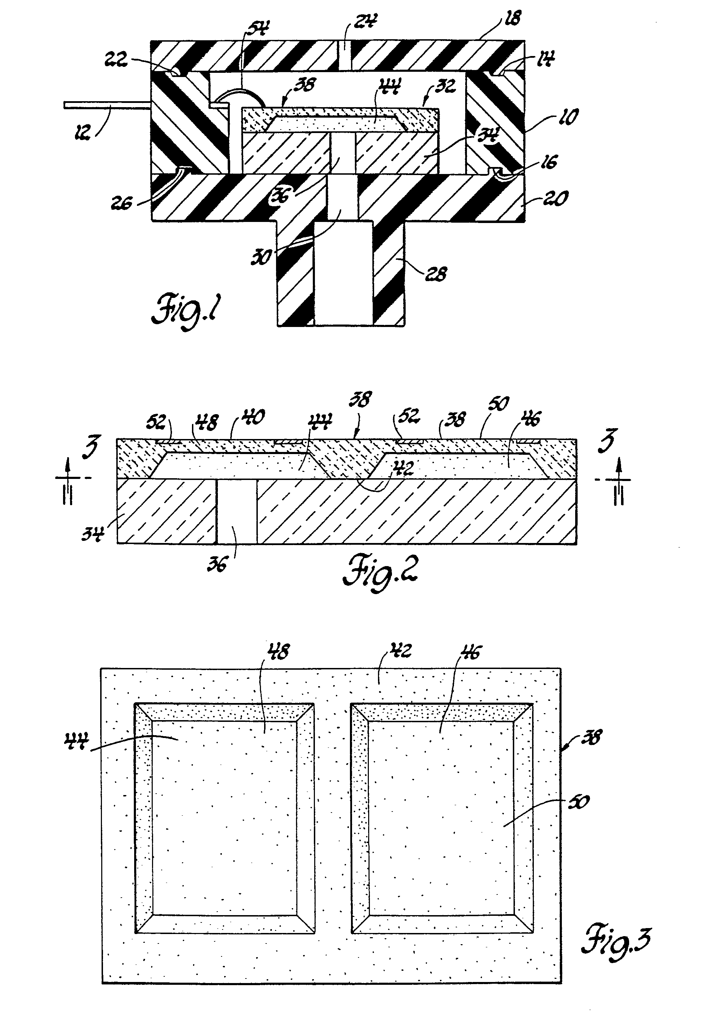

Figure 1 shows the pressure sensor package which includes a housing 10 of generally rectangular configuration which comprises a wall for the package. A plurality of terminals 12 insert-moulded in the housing 10 extend laterally through one side of the housing and terminate inside the housing for connection with the sensor leads. The housing has along its upper and lower surfaces grooves 14 and 16 for mating with a cover 18 and a base 20 respectively, which are also generally rectangular and will be coextensive with the outer periphery of the housing 10. The cover 18 includes a rib 22 along its periphery to mate with the groove 14 of the housing 10. A vent 24 in the cover admits atmospheric pressure to the interior of the sensor package. The base 20 also has a rib 26 which mates with the groove 16 of the housing 10 and has a tubular portion 28 dependent from and perpendicular to its lower surface and which is axially aligned with a port 30 extending through the base 20 to the interior of the package 10. Each of the housing parts 10, 18 and 20 are moulded of a polymer material, such as a polyester, and are secured together at their mating surfaces by an adhesive, such as a room temperature vulcanizable (RTV) adhesive. These parts are easily and inexpensively manufactured and assembled.

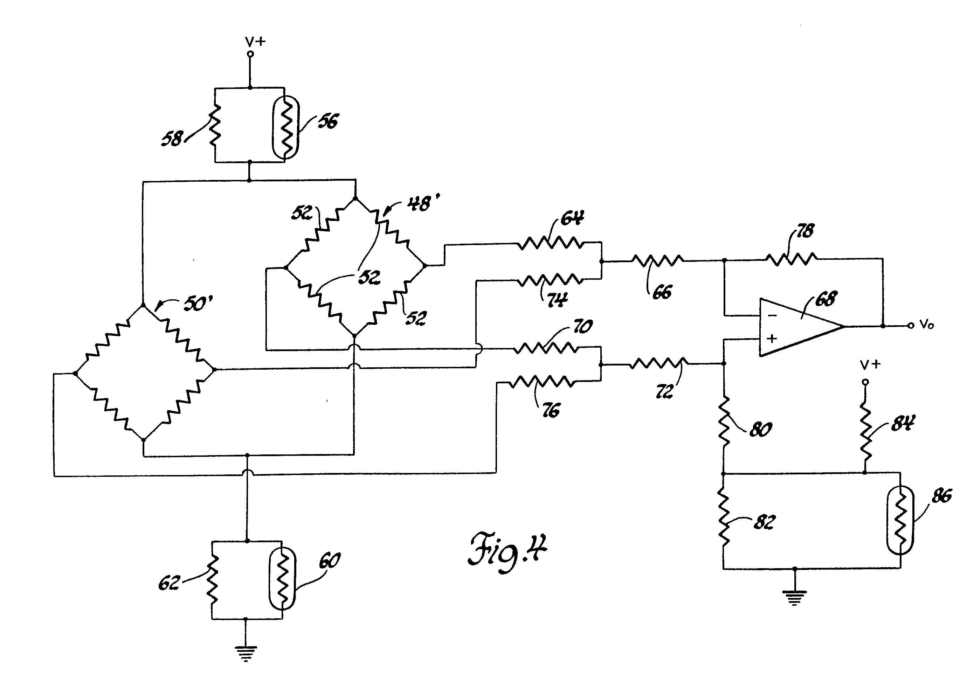

The pressure sensor 32 comprises a glass plate 34 having a hole 36 therethrough aligned with the port 30, the plate being secured to the base 20 by RTV adhesive. A silicon chip 38 is anodically bonded to the upper surface of the glass plate 34. As better shown in Figure 2, the chip 38 has an upper planar surface 40 and a lower mounting surface 42 in contact with the plate 34. A pair of cavities 44 and 46 of generally rectangular cross section, as shown in Figure 3, are formed in the mounting surface 42 of the chip 38 so that the cavity 44 is in communication with the hole 36 of the plate 34 and the cavity 46 is completely sealed. The process of anodically bonding the chip to the glass plate is performed in an evacuated chamber held at a predetermined degree of vacuum, say $5 \times 10^{-3}$ microns Hg, so that the cavity 46 is sealed at that fixed vacuum or reference pressure. A first diaphragm 48 is defined by the cavity 44 and the upper or planar surface 40 of the chip 38. A second diaphragm 50 is defined by the cavity 46 and the upper surface 40 of the chip. The diaphragms are preferably about 0.0254 mm (0.001 inch) thick when the whole chip thickness is about 0.406 mm (0.016 inch). When the vent 24 of Figure 1 is vented to atmosphere, the deflection of the diaphragm 50 will be determined by the pressure thereacross which is the difference of the atmospheric pressure and the vacuum reference in the cavity 46, thereby providing an absolute barometric pressure response. If the tube 28 is connected to an engine manifold, the diaphragm 48 is deflected according to the difference between the manifold pressure and the atmospheric pressure, therefore, responding to the manifold gauge pressure.

Four resistors 52 are formed in each of the diaphragms by ion implantation. The resistors exhibit a piezoresistive effect so that the resistance values depend upon the diaphragm deflection. The four resistors of each diaphragm are connected into a bridge configuration. These circuits contain contact pads, not shown, which are connected by wire bonds 54 to the terminal conductors 12.

Figure 4 illustrates a specific circuit for the accurate derivation of manifold absolute pressure from the output of the two bridges. The bridge 48' is that bridge on the diaphragm 48 made up of the ion implanted resistors 52 and the bridge 50' is made up of the similar resistors implanted on the diaphragm 50. The bridges are connected in parallel to an input circuit comprising a parallel combination of an NTC thermistor 56 and a resistor 58 connected between a regulated voltage source V+ and upper input corners of the bridges 48' and 50'. The lower input corners of the bridges are connected through a similar parallel circuit comprising a thermistor 60 and resistor 62 to ground. The purpose of the thermistor network is to

5

provide a temperature compensation function for the
bridges. Normally the bridge outputs would vary
with temperature at a different rate for each pressure.
The compensation network adjusts for temperature so
that the bridge outputs vary with temperature at the
same rate for each pressure. The outputs of the bridges
are connected to inputs of an operational amplifier to
subtractively combine the bridge output signals. Thus
any change in atmospheric pressure will change both
bridge outputs equally and the changes will cancel out
and not effect the combined signal. Specifically one
output corner of the bridge 48' is connected through
a resistor 64 and a resistor 66 to the negative input
terminal of an operational amplifier 68 and the other
output corner of the bridge 48' is connected through
a resistor 70 and resistor 72 to the positive input
terminal of the amplifier 68. The bridge 50' has
one output corner connected through a resistor 74 to
the junction of the resistors 64 and 66 while the
other output corner is connected through a resistor 76
to the junction of the resistors 70 and 72. The
resistors 64, 74, 70 and 76 are all equal in value
and are much larger in value than the resistors 66
and 72. The output of the amplifier 68, $V_0$, is the
voltage representing the manifold absolute pressure.
A feedback resistor 78 extends between the amplifier
output and its negative input. The positive input
terminal of the amplifier 68 is connected to another
temperature compensating circuit, which comprise
resistors 80 and 82 serially connected to ground, a
resistor 84 and NTC thermistor 86 serially connected
between the regulated voltage V+ and ground, the
junction point of the resistors 80 and 82 being connected to the junction point of the resistor-thermistor
pair 84, 86. This thermistor compensating network
renders the bridge output vs. temperature curves horizontal so that the combined bridge output will be independent of temperature.

It will thus be seen that by combining two diaphragms on a single silicon chip, one being disposed between a vacuum reference cavity and atmospheric pressure and the other being disposed between atmospheric pressure and a cavity containing manifold pressure and by properly combining the outputs of piezoresistive bridges situated on each diaphragm, a signal voltage proportional to the manifold absolute pressure is readily generated. Moreover, with this structure, the bridge circuitry and interconnecting conductors in the sensor package are isolated from the manifold exhaust gases, thereby protecting the electrical circuitry from contaminants in those gases.

Claims:

1. A pressure sensor comprising
a single chip (38) of semiconductor material
having a mounting surface (42) and an opposed flat surface
(40), <u>characterised in that</u> there are two separate
cavities (44, 46) formed in the chip on the mounting
surface to define two respective diaphragms (48, 50)
between the respective cavities (44, 46) and the flat
surface (40);
a mounting member (34) having a planar surface is
bonded to the mounting surface (42) of the chip (38) to
form chambers with the cavities, one chamber having
therein a reference pressure;
there is a port (36) in the mounting member (34)
for connection of the other chamber to a first source of
pressure;
there are means (24) for exposing the flat
surface (40) of the chip to a second source of pressure;
and there is
a piezoresistive bridge (48', 50') on the flat
surface of each diaphragm (48, 50) whereby the bridges,
when energized, have outputs corresponding to the pressure
differences existing across the respective diaphragms.

2. A pressure sensor according to claim 1,
<u>characterised in that</u> said one chamber is evacuated to
provide a vacuum reference,
and there is an electrical circuit connected to
the bridges (48', 50') for combining the outputs thereof
to obtain a signal proportional to the pressure from said
first source of pressure.

3. A pressure sensor, for measuring the manifold
absolute pressure in an internal combustion engine,
according to claim 2, <u>characterised in that</u>
said port (36) in the mounting member (34) connects said other chamber to engine manifold pressure;

said means (24) for exposing the flat surface
(40) of the chip exposes the flat surface to atmospheric
pressure;

the outputs of the respective bridges (48', 50')
represent barometric pressure and manifold gauge pressure
respectively, and

said circuit connected to the bridges (48', 50')
subtracts one output from the other to obtain a signal
proportional to the manifold absolute pressure.

Fig.1

Fig.2

Fig.3

Fig. 4

2/2

0049955

0049955

Application number

EP 81304204.1

## European Patent Office

## EUROPEAN SEARCH REPORT

| Category | Citation of document with indication, where appropriate, of relevant passages | Relevant to claim |
|---|---|---|
| | **DOCUMENTS CONSIDERED TO BE RELEVANT** | |
| X | GB - A - 2 036 425 (HITACHI)<br>* Abstract; fig. 1,3; page 3, lines 43,44,80-85; page 1, lines 10-23 *<br>-- | 1-3 |
| X | US - A - 4 222 277 (KURTZ et al.)<br>* Abstract; column 1, lines 9-21; column 4, line 66; fig. 4-7 *<br>-- | 1-3 |
| | GB - A - 1 344 519 (CESKOSLOVEN-SKA AKADEMIE VED)<br>* Fig. 1 *<br>-- | 1 |
| | ELEKTRONIK, 29. Jahrgang, Heft.10, 14. Mai 1980, München<br>H. HENCKE "Piezoresistive Druck-aufnehmer: Aufbau, Beschaltung und Einsatz"<br>Seiten 47-50<br>* Page 47, left column, last paragraph *<br>-- | 1 |
| A | DE - A1 - 3 003 449 (NISSAN)<br>* Fig. 3 *<br>& GB-A-2 047 465<br>---- | |

CLASSIFICATION OF THE APPLICATION (Int. Cl.)

G 01 L 9/06
H 01 L 29/84

TECHNICAL FIELDS SEARCHED (Int. Cl.)

G 01 L 9/00
H 01 L 29/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| X | | |

| Place of search | Date of completion of the search | Examiner |
|---|---|---|
| VIENNA | 09-11-1981 | BURGHARDT |

EPO Form 1503.1  06.78